# EUROPÄISCHE PATENTSCHRIFT

(11) **EP 3 486 606 B1**
(45) Veröffentlichungstag und Bekanntmachung des Hinweises auf die Patenterteilung: **20.05.2026**
(21) Anmeldenummer: 17202630.4
(22) Anmeldetag: 20.11.2017
(51) Int. Cl.: G06T 7/593, G06V 10/75, H04N 13/204, G01C 11/02, B64D 47/08, G01C 11/16, H04N 13/122, H04N 13/243, H04N 13/00

(54) **STEREOKAMERA UND STEREOPHOTOGRAMMETRISCHES VERFAHREN**
STEREO CAMERA AND STEREOPHOTOGRAMMETRIC METHOD
CAMÉRA STÉRÉO ET PROCÉDÉ STÉRÉOPHOTOGRAMMÉTRIQUE

(43) Veröffentlichungstag der Anmeldung: 22.05.2019
(73) Patentinhaber: Leica Geosystems AG, 9435 Heerbrugg (CH)
(72) Erfinder: VAN DER ZWAN, Elmar Vincent, 9428 Walzenhausen (CH)
(74) Vertreter: Kaminski Harmann

(56) Entgegenhaltungen:
- EP-A2- 2 918 972
- DE-A1- 102013 202 658
- US-A1- 2010 074 532
- US-A1- 2016 037 152
- CHRISTIAN BANZ ET AL: "Real-time stereo vision system using semi-global matching disparity estimation: Architecture and FPGA-implementation", EMBEDDED COMPUTER SYSTEMS (SAMOS), 2010 INTERNATIONAL CONFERENCE ON, IEEE, PISCATAWAY, NJ, USA, 19 July 2010 (2010-07-19), pages 93 - 101, XP031806017, ISBN: 978-1-4244-7936-8

## Beschreibung

Die vorliegende Erfindung betrifft eine handhaltbare Vorrichtung mit einer Stereokamera sowie ein Verfahren zum bildbasierten Vermessen eines entfernten Objekts mittels einer solchen Vorrichtung.

Vorrichtungen und Verfahren zur stereophotogrammetrischen Bildaufnahme sind im Stand der Technik grundsätzlich bekannt und werden vielfältig eingesetzt, um Messungen in Bildern vorzunehmen, also insbesondere zum Ermitteln von Dimensionen in einem Bild, wie zum Beispiel von Entfernungen zwischen abgebildeten Merkmalen.

Beispielsweise zeigen sowohl die EP 2 918 972 A2 als auch die DE 10 2013 202 658 A1 jeweils ein Verfahren und ein entsprechendes handhaltbares Gerät zum Erstellen eines Raummodells mittels Stereophctogrammetrie. Die US 2016/037152 A1 und die US 2010/074532 A1 zeigen weitere Verfahren und Geräte, um 3D-Informationen und Formen aus 2D-Bilder zu generieren. Ein geläufiges Verfahren beim Stereomatching ist das Semi-Global Matching Verfahren. Christian Banz et al. zeigen in ihrem Paper "Real-Time Stereo Vision System using Semi-Global Matching Disparity Estimation: Architecture and FPGA-Implementation" (ISBN: 978-1-4244-7936-8, Seiten 93-101) eine Architektur und Implementation des Semi-Global-Matching-Verfahrens.

Bei der Verwendung bekannter Stereophotogrammetrie-Vorrichtungen zur Aufnahme von Bildern künstlicher bzw. menschengemachter Strukturen wie Gebäuden kann es beim automatisierten Zusammenführen (Matching) der Bilder mittels Merkmalsextraktion zu Fehlern kommen. Dies liegt darin begründet, dass insbesondere moderne Gebäude viele gleichförmige und sich wiederholende Merkmale aufweisen. Ist die Stereobasis der Stereophotogrammetrie-Vorrichtung bei der Aufnahme nun zufällig parallel zur Wiederholungsrichtung, können die sich gleichenden Merkmale in den beiden Bildern unter Umständen falsch zueinander zugeordnet werden, sodass ein falsch zusammengesetztes Stereobild entsteht und die darin vorgenommenen Bildmessungen fehlerhaft sind.

Es ist daher eine Aufgabe der vorliegenden Erfindung, eine Vorrichtung und ein Verfahren bereitzustellen, mittels welcher die Fehlerwahrscheinlichkeit beim Zusammensetzen der Bilder im Rahmen der Stereophotogrammetrie reduziert werden kann.

Insbesondere ist es eine Aufgabe, eine solche Vorrichtung und ein solches Verfahren bereitzustellen, mittels welcher die Fehlerwahrscheinlichkeit ohne besonderen konstruktiven Aufwand oder wesentlich erhöhte Rechenleistung reduzierbar ist.

Eine weitere Aufgabe ist es, eine solche Vorrichtung und ein solches Verfahren bereitzustellen, die für einen Benutzer einfach und intuitiv handhabbar sind.

Mindestens eine dieser Aufgaben wird durch die Verwirklichung der kennzeichnenden Merkmale der unabhängigen Ansprüche gelöst. Vorteilhafte Ausgestaltungen der Erfindung finden sich dabei in den jeweils abhängigen Ansprüchen.

Da insbesondere zeitgenössische Gebäude in aller Regel gerade und mit rechten Winkeln geplant und gebaut werden, sind sie an der Richtung der Schwerkraft und der zu dieser orthogonalen Horizontlinie ausgerichtet. Das führt dazu, dass bei Gebäuden die Richtungen der Wiederholung gleicher Merkmale (beispielsweise die Fenster einer Fensterfront) in der Regel exakt horizontal und/oder vertikal sind. Bei einer Stereokamera-Vorrichtung gemäss der vorliegenden Erfindung wird daher erfindungsgemäss eine Stereobasis verwendet, die relativ zu einer Längsachse des Gerätes, die während der normalen Verwendung im wesentlichen horizontal ausgerichtet ist, diagonal angeordnet ist.

Ein erster Aspekt der vorliegenden Erfindung betrifft eine handhaltbare Vorrichtung zum bildbasierten Vermessen eines entfernten Objekts, aufweisend ein Gehäuse mit einer Vorderseite und einer Rückseite, eine erste Kamera und eine zweite Kamera, die mit einer Stereobasis als einem festen Abstand zueinander auf der Rückseite angeordnet sind, zur Aufnahme von Bildern des Objekts, eine Auswerteeinheit mit einem Algorithmus zum stereophotogrammetrischen Auswerten der Bilder der ersten Kamera und der zweiten Kamera und eine Anzeigeeinheit, die auf der Vorderseite angeordnet ist, zur Anzeige von Bildern des Objekts und von Ergebnissen der stereophotogrammetrischen Auswertung. Das Gehäuse weist eine Längsachse auf, und die Vorrichtung ist zum handgehaltenen Gebrauch durch einen Benutzer derart ausgestaltet, dass sie zur Aufnahme von Bildern des Objekts so gehalten wird, dass die Längsachse im wesentlichen horizontal ist. Die Stereobasis ist relativ zur Längsachse diagonal ausgerichtet, wobei die Auswerteeinheit dazu ausgestaltet ist, die relative Ausrichtung der Stereobasis beim stereophotogrammetrischen Auswerten zu berücksichtigen, in mindestens einem der Bilder sich wiederholende Muster zu erkennen und daraus eine Wiederholungsrichtung sich wiederholender Merkmale des Objekts abzuleiten, und einen Winkel β zwischen der Wiederholungsrichtung und einer Epipolarlinie zu ermitteln.

Gemäss einer Ausführungsform weist die Vorrichtung einen elektronischen Distanzmesser auf, insbesondere ausgebildet als ein Laserentfernungsmesser, der auf der Rückseite angeordnet ist, zum Messen einer Entfernung zu dem entfernten Objekt, wobei die Auswerteeinheit dazu ausgestaltet ist, die gemessene Entfernung beim stereophotogrammetrischen Auswerten zu berücksichtigen.

Gemäss einer weiteren Ausführungsform der Vorrichtung, ist die Stereobasis relativ zur Längsachse in einem Winkel von mindestens 20° angeordnet, insbesondere in einem Winkel zwischen 30° und 60°.

Gemäss einer Ausführungsform sind die Kameras derart angeordnet, dass die Stereobasis mindestens 75% einer maximalen Ausdehnung der Rückseite umfasst, insbesondere mindestens 90%.

In einer Ausführungsform weist die Vorrichtung Eingabemittel auf, die auf der Vorderseite angeordnet sind, zur Eingabe von Daten und/oder Befehlen durch einen Benutzer. Die Eingabemittel können insbesondere als Tasten ausgestaltet sein, oder die Anzeigeeinheit und die Eingabemittel sind als ein Touchscreen ausgebildet.

Die Eingabemittel sind insbesondere dazu ausgestaltet, ein Markieren oder Auswählen von Bildpunkten in dem Bild des Objekts durch einen Benutzer zu ermöglichen, wobei die Bildpunkte Zielpunkten des Objekts entsprechen. Die Auswerteeinheit kann dann dazu ausgestaltet sein, eine Distanz zwischen den den ausgewählten Bildpunkten entsprechenden Zielpunkten zu ermitteln und auf der Anzeigeeinheit anzuzeigen.

In einer Ausführungsform weist die Vorrichtung eine nach einem Auslösen durch einen Benutzer automatisch ablaufende Aufnahmefunktionalität, im Rahmen welcher im zeitlichen Zusammenhang, insbesondere gleichzeitig, die erste Kamera ein erstes Bild und die zweite Kamera ein zweites Bild des Objekts aufnehmen, der Algorithmus der Auswerteeinheit das erste Bild und das zweite Bild mittels Merkmalserkennung und anhand der Kenntnis über die Stereobasis zueinander in Beziehung setzen, und ein Bild des Objekts auf der Anzeigeeinheit angezeigt wird.

Dabei kann das Zueinander-in-Beziehung-Setzen des ersten Bildes und des zweiten Bildes insbesondere ein Rektifizieren der Bilder und ein Stereomatching der rektifizierten Bilder aufweisen, insbesondere mittels des Semi-Global-Matching-Verfahrens.

In einer Ausführungsform ist die Auswerteeinheit dazu ausgestaltet, in mindestens einem der Bilder sich wiederholende Muster zu erkennen und daraus eine Wiederholungsrichtung sich wiederholender Merkmale des Objekts abzuleiten, und einen Winkel β zwischen der Wiederholungsrichtung und einer Epipolarlinie zu ermitteln, wobei die Auswerteeinheit dazu ausgestaltet ist, Massnahmen einzuleiten, wenn der Wert des Winkels β einen vordefinierten Schwellenwert unterschreitet, wobei die Massnahmen dazu geeignet sind, zu einer weiteren Aufnahme von Bildern des Objekts zu führen, bei denen der vordefinierte Schwellenwert erreicht oder überschritten wird.

Gemäss einer Ausführungsform der Vorrichtung umfassen die Massnahmen eine Handlungsanweisung für einen Benutzer, die Vorrichtung für die weitere Aufnahme im Vergleich zu einer vorherigen Aufnahme schräg zu halten, insbesondere wobei die Handlungsanweisung auf der Anzeigeeinheit angezeigt wird.

Ein zweiter Aspekt der Erfindung betrifft ein Verfahren zum bildbasierten Vermessen eines entfernten Objekts mittels einer handgehaltenen Vorrichtung gemäss dem ersten Aspekt der Erfindung, aufweisend eine stereoskopische Aufnahme von Bildern durch eine erste Kamera und eine zweite Kamera, und ein stereophotogrammetrisches Auswerten der Bilder der ersten Kamera und der zweiten Kamera. Die Vorrichtung weist eine Längsachse auf und wird während der Aufnahme durch einen Benutzer derart gehalten, dass die Längsachse im wesentlichen horizontal ist. Das Auswerten der Bilder erfolgt gemäss diesem Aspekt der Erfindung unter Berücksichtigung eines bekannten Winkels α, wobei die erste Kamera und die zweite Kamera mit einer Stereobasis als einem festen Abstand zueinander auf der Vorrichtung derart angeordnet sind, dass die Stereobasis mit dem Winkel α relativ zu der Längsachse der Vorrichtung diagonal ausgerichtet ist.

Gemäss einer Ausführungsform umfasst das Verfahren
- eine Anzeige eines Bildes auf einer Anzeigeeinheit der Vorrichtung, basierend auf mindestens einem der Bilder der ersten Kamera und der zweiten Kamera,
- einer Auswahl zu vermessender Dimensionen durch einen Benutzer,
- einer der Auswahl entsprechenden Vermessung basierend auf den stereophotogrammetrisch ausgewerteten Bildern, und
- einer Ausgabe des Ergebnisses auf einer Anzeigeeinheit und/oder einem Speichern des Ergebnisses in einem Datenspeicher der Vorrichtung.

Ein dritter Aspekt der Erfindung betrifft ein Computerpro - grammprodukt mit Programmcode, der auf einem maschinenlesbaren Träger gespeichert ist, zur Ausführung eines Verfahrens zum bildbasierten Vermessen eines entfernten Objekts mittels einer handgehaltenen Vorrichtung gemäss dem zweiten Aspekt, wobei das Programm in einer Auswerteeinheit einer Vorrichtung gemäss dem ersten oder zweiten Aspekt der Erfindung ausgeführt wird und mindestens die folgenden Schritte aufweist:
- eine stereoskopische Aufnahme von Bildern durch die erste Kamera und die zweite Kamera, und
- ein stereophotogrammetrisches Auswerten der Bilder der ersten Kamera und der zweiten Kamera, wobei das Auswerten unter Berücksichtigung des bekannten Winkels α erfolgt.

Ein vierter Aspekt der vorliegenden Erfindung betrifft ein System zum bildbasierten Vermessen eines entfernten Objekts, aufweisend eine handhaltbare Vorrichtung und ein Computerprogrammprodukt. Die handhaltbare Vorrichtung weist dabei ein Gehäuse mit einer Vorderseite und einer Rückseite, eine erste und eine zweite Kamera, die mit einer Stereobasis als einem festen Abstand zueinander auf der Rückseite angeordnet sind, zur Aufnahme von Bildern des Objekts, und eine Datenschnittstelle zum Übermitteln digitaler Bilddaten aufgenommener Bilder an ein externes elektronisches Gerät auf.

Die Stereobasis ist relativ zur Längsachse diagonal ausgerichtet, wobei der Programmcode eine Information über die relative Ausrichtung der Stereobasis enthält, in dem externen elektronischen Gerät ausführbar ist, und dazu ausgestaltet ist, die relative Ausrichtung der Stereobasis beim stereophotogrammetrischen Auswerten zu berücksichtigen.

Gemäss einer Ausführungsform weist die handhaltbare Vorrichtung den maschinenlesbaren Träger auf, insbesondere wobei der maschinenlesbare Träger ein fest verbauter Datenspeicher ist, und ist dazu ausgestaltet, den Programmcode über die Datenschnittstelle an das externe elektronische Gerät zu übermitteln.

Die erfindungsgemässe Vorrichtung und das erfindungsgemässe Verfahren werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine Aufnahme eines Bildes eines Gebäudes mittels einer handgehaltenen Stereophotogrammetrie-Vorrichtung des Standes der Technik;
- Fig. 2a-b: die Stereophotogrammetrie-Vorrichtung aus Fig. 1;
- Fig. 3a-c: Probleme beim photogrammetrischen Vermessen des Gebäudes mit der Vorrichtung aus Fig. 1;
- Fig. 4a-b: eine beispielhafte Ausführungsform einer erfindungsgemässen handgehaltenen Stereophotogrammetrie-Vorrichtung;
- Fig. 5: eine Aufnahme eines Bildes eines Gebäudes mittels einer beispielhaften Ausführungsform einer erfindungsgemässen handgehaltenen Stereophotogrammetrie-Vorrichtung;
- Fig. 6a-c: ein photogrammetrisches Vermessen des Gebäudes mit einer erfindungsgemässen Vorrichtung;
- Fig. 7: eine beispielhafte Ausführungsform eines erfindungsgemässen Verfahrens zum bildbasierten Vermessen eines entfernten Objekts;
- Fig. 8a-b: ein Erkennen eines Winkels zwischen einer Epipolarlinie und einer Wiederholungsrichtung von Merkmalen;
- Fig. 9: Verfahrensschritte zum Erkennen eines Winkels zwischen einer Epipolarlinie und einer Wiederholungsrichtung; und
- Fig. 10: eine beispielhafte Ausführungsform eines erfindungsgemässen Systems zum bildbasierten Vermessen eines entfernten Objekts.

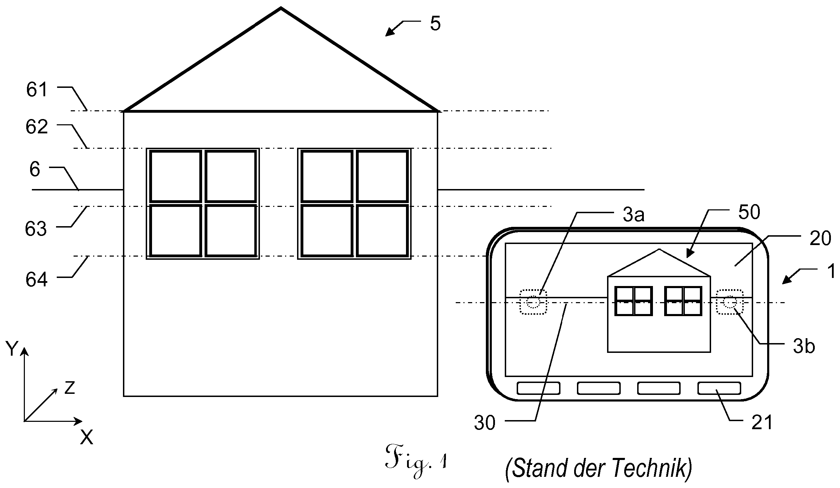

In Figur 1 wird eine Aufnahme eines Bildes 50 eines Gebäudes 5 mittels einer handgehaltenen Stereophotogrammetrie-Vorrichtung 1 des Standes der Technik illustriert. Dargestellt ist eine einem Benutzer bei der Aufnahme zugewandte Vorderseite 11 der Vorrichtung 1. Diese weist eine Anzeigeeinheit 20, beispielsweise ausgestaltet als ein Touchscreen, und ein Feld mit Tasten 21 zur Auswahl von Funktionen der Vorrichtung 1 auf.

Auf einer dem aufzunehmendem Gebäude 5 zugewandten Rückseite der Vorrichtung 1 sind zwei Kameras 3a, 3b mit einer Stereobasis 30 angeordnet. Die Stereobasis 30 ist hier parallel zu einer Längsachse der Vorrichtung 1.

Das Gebäude 5 als von den Kameras 3a, 3b aufzunehmendem Objekt, das hier zur Illustration vor einem Horizont 6 dargestellt ist, weist eine Reihe von prominenten Merkmalen auf, die horizontal, d. h. entlang der X-Achse, ausgerichtet sind. Dies betrifft z. B. die Fenster und die Traufe, die entlang den horizontalen Linien 61-64 ausgerichtet sind. Es werden zudem überwiegend rechte Winkel verwendet, sodass die Merkmale Fenster und Wände auch vertikal verlaufen.

Die Stereophotogrammetrie-Vorrichtung 1 ist derart ausgestaltet, dass sie von einem Benutzer vorzugsweise gerade gehalten wird, also mit ihrer Längsachse parallel zum Horizont 6, unter anderem weil auf der Anzeigeeinheit 20 angezeigte Messwerte so am einfachsten ablesbar sind. Dies führt dazu, dass die Stereobasis 30 in derselben Richtung verläuft wie die prominenten Merkmale des Gebäudes 5.

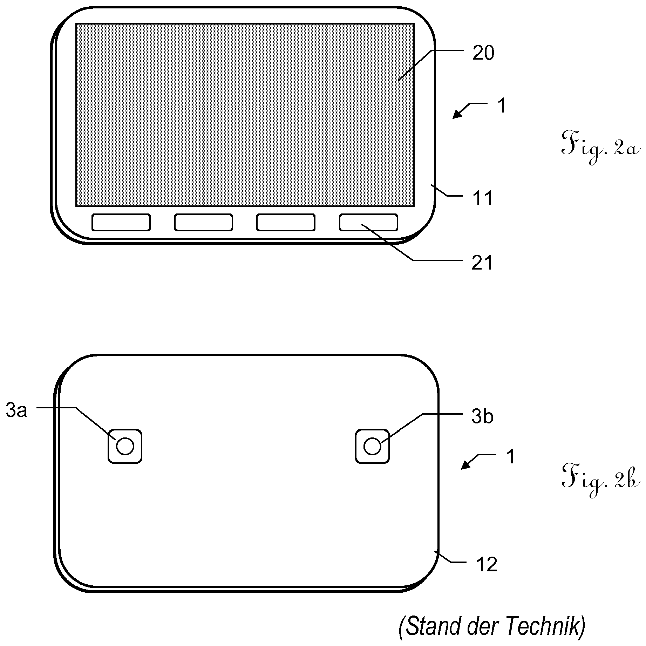

Die Stereophotogrammetrie-Vorrichtung 1 aus Figur 1 ist in den Figuren 2a und 2b im Detail dargestellt. Dabei zeigt Figur 2a die Vorderseite 11 mit Anzeigeeinheit 20, und Tasten 21, und Figur 2b die Rückseite 12 mit den beiden Kameras 3a, 3b, die auf der gleichen Höhe des Gehäuses angeordnet sind.

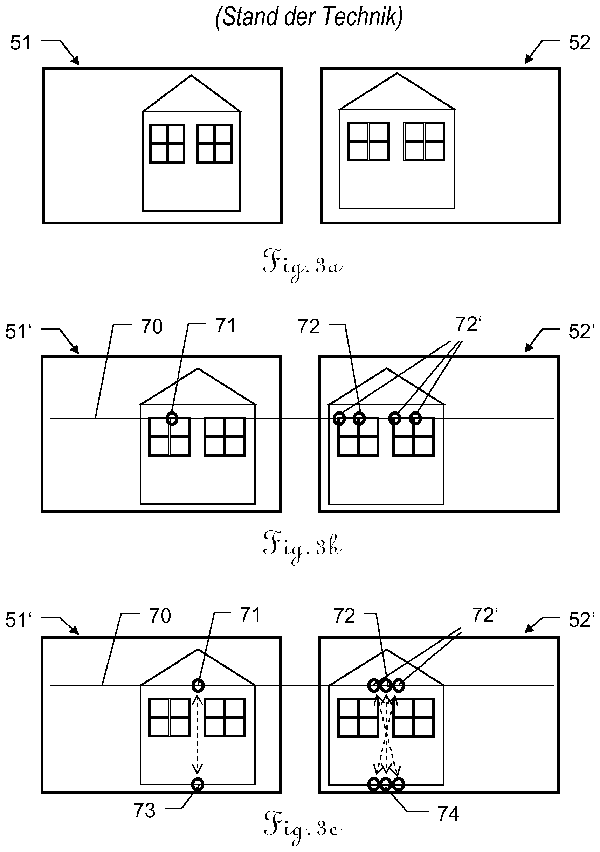

In den Figuren 3a-c wird illustriert, welche Probleme bei der in Figur 1 gezeigten Aufnahme eines Gebäudes 5 mittels einer in den Figuren 2a-b gezeigten Vorrichtung 1 auftreten.

Figur 3a zeigt nebeneinander die von den beiden Kameras 3a, 3b gleichzeitig aufgenommenen Bilder 51, 52 des Gebäudes. Bei typischen Algorithmen zum Stereomatching, wie beispielsweise "Semi-Global Matching" ist als vorheriger Schritt nötig, dass die Bilder zueinander rektifiziert werden.

In Figur 3b hat eine entsprechende Rektifizierung der Bilder aus Figur 3a stattgefunden. In den rektifizierten Bildern 51', 52' ist eine epipolare Linie 70 dargestellt, die diese jeweils in einer Geraden schneidet. Nach der Rektifizierung sind die Epipolarlinien 70 in den rektifizierten Bildern 51', 52' horizontal, d. h. ein zu einem im ersten Bild 51' liegenden Bildpunkt (Pixel) korrespondierender Bildpunkt (Pixel) im zweiten Bild 52' liegt auf derselben Bildzeile. Ein zu einem im ersten Bild 51' gegebenen, auf der dargestellten Epipolarlinie 70 liegenden Punkt 71, korrespondierender Bildpunkt 72 im zweiten Bild 52' kann entsprechend ebenfalls nur auf der epipolaren Linie 70 liegen.

Zum Matchen der beiden Bilder 51, 52 muss der Algorithmus ein Merkmal im ersten rektifizierten Bild 51' also nur mit solchen Merkmalen des zweiten rektifizierten Bildes 52' vergleichen, die auf derselben Epipolarlinie 70 liegen. Hier ist im linken Bild 51' beispielhaft eine Ecke eines Fensterkreuzes als Merkmal 71 dargestellt. Durch die gleichförmige Bauweise wiederholen sich am Gebäude gleichartige Merkmale in horizontaler Richtung - beide Fenster sind gleich gross und gleich gestaltet und liegen zudem auf derselben Höhe.

Da in den rektifizierten Bildern 51', 52' auch die Epipolarlinie 70 horizontal verläuft, liegen im rechten Bild 52' mehrere ähnliche bzw. gleichartige Merkmale 72, 72' nebeneinander auf der Epipolarlinie 70. Dadurch kann es beim Matchen der Merkmale zu Fehlern kommen, wenn der Algorithmus dem Merkmal 71 im ersten Bild 51 statt des eigentlich korrespondierenden Merkmals 72 im zweiten Bild 52 irrtümlich ein gleichartiges Merkmal 72' zuordnet.

Figur 3c zeigt rektifizierte Bilder 51', 52', in welchen eine Entfernungsmessung zwischen zwei Punkten erfolgen soll. Im linken Bild 51' sind dies die Punkte 73 und 71, die jeweils auf einer horizontal verlaufenden Linie des Gebäudes liegen. Auch hier kann es durch die Parallelität der beiden Epipolarlinien 70, 70' und der Gebäudemerkmale zu Fehlern kommen, aufgrund welcher eine falsche Entfernungsmessung erfolgt.

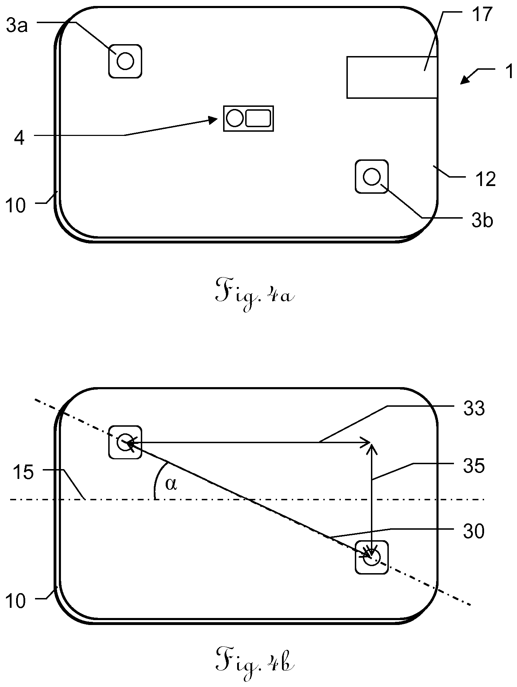

In den Figuren 4a und 4b wird eine beispielhafte Ausführungsform einer erfindungsgemässen Stereophotogrammetrie-Vorrichtung 1 dargestellt. Dabei wird jeweils die Rückseite 12 des Gehäuses 10 der Vorrichtung 1 mit den Kameras 3a, 3b gezeigt. In Figur 4a sind zusätzlich ein Laserentfernungsmesser 4 zum Messen von Entfernungen zu einem entfernten Objekt (beispielsweise zu einem Punkt auf einem Gebäude) und eine Anschlagseinheit 17 zum Anhalten der Vorrichtung 1 an einen feste Oberfläche dargestellt.

Eine mit dem Laserentfernungsmesser 4 erfasste Entfernung kann insbesondere zum Skalieren der von den Kameras 3a, 3b aufgenommenen Bildern verwendet werden, was die Genauigkeit photogrammetrischer Messungen erhöht.

Figur 4b illustriert die Geometrie. Dargestellt sind eine Gehäuselängsachse 15, eine orthogonal zu dieser verlaufende Gehäusequerachse 16 und die relativ zu diesen beiden diagonal ausgerichtete Stereobasis 30. Ausser mit einem Längsabstand 33, der entlang bzw. parallel zu der Längsachse 15 verläuft, sind die beiden Kameras auch mit einem Querabstand 35, der orthogonal zur Längsachse 15 verläuft, zueinander angeordnet. In Abhängigkeit von Längsabstand 33 und Querabstand 35 ergibt sich dadurch ein Winkel α zwischen der Stereobasis 30 und der Gehäuselängsachse 15.

Mit der gezeigten Vorrichtung 1 kann auch ein ungeübter Benutzer qualitativ hochwertige photogrammetrische Messungen an Gebäuden und anderen menschengemachten Strukturen durchführen. Dabei besteht regelmässig keine Notwendigkeit, die Vorrichtung 1 bei der Bildaufnahme schräg zu halten. Weiterhin kann durch die schräge Anordnung der Kameras 3a,b vorteilhaft eine maximale Länge der Stereobasis 30 erreicht werden.

Allerdings muss die Vorrichtung in dem Fall doch schräggehalten werden, dass natürliche oder künstliche Objekte zu vermessen sind, bei denen sich Objektmerkmale in einem der Schräge der Stereobasis 30 entsprechenden Winkel wiederholen. Solche Fälle kommen in der Praxis aber vergleichsweise selten vor.

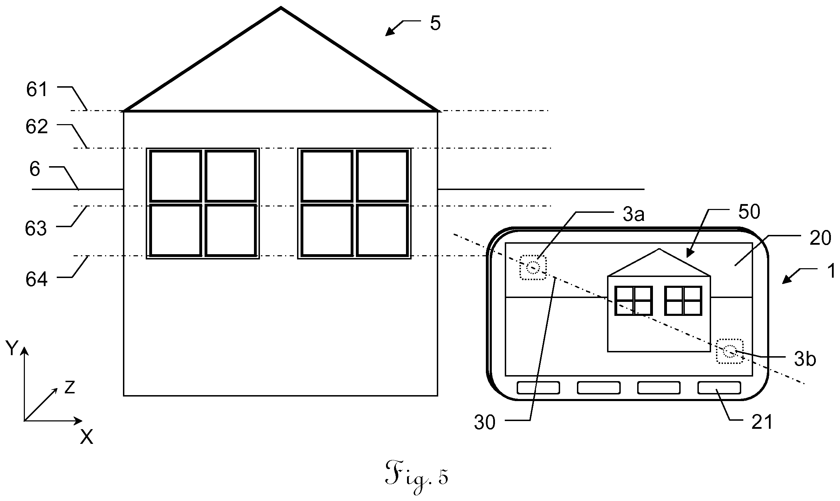

Figur 5 zeigt, analog zu Figur 1, eine Aufnahme eines Bildes 50 eines Gebäudes 5 mittels der handgehaltenen Stereophotogrammetrie-Vorrichtung 1 der Figuren 4a und 4b. Anders als bei der in Figur 1 gezeigten Vorrichtung 1 ist die Stereobasis 30 nicht parallel zu den horizontalen Linien 61-64, entlang welcher die prominenten Merkmale des Gebäudes 5 ausgerichtet sind, obwohl die Vorrichtung 1 geradegehalten wird.

Der Benutzer kann mit den Kameras 3a, 3b stereoskopisch Bilder des Gebäudes 5 aufnehmen, und in einem von der Anzeigeeinheit 20 angezeigten Bild 50 Bildpunkte 56, 57 markieren, die Zielpunkten 66, 67 am echten Gebäude 5 entsprechen, und eine Entfernung 68 zwischen den Zielpunkten photogrammetrisch bestimmen und sich anzeigen lassen.

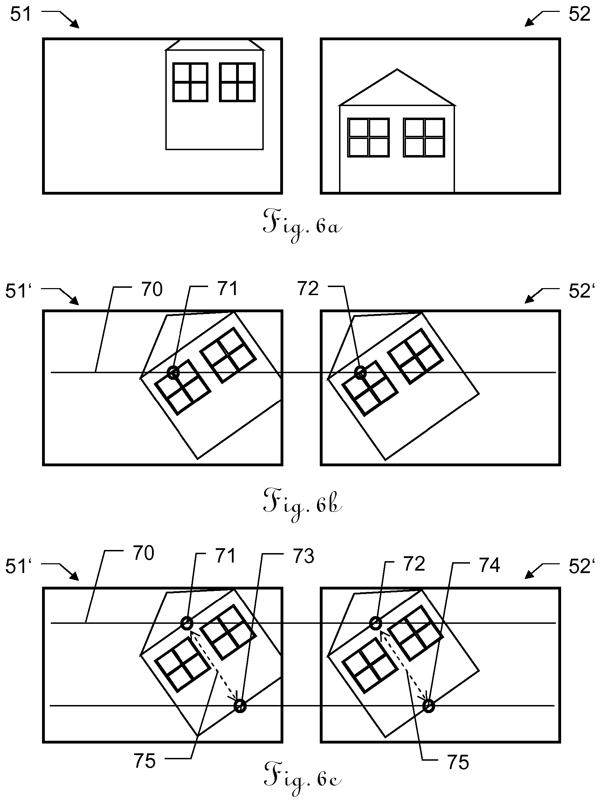

Die Figuren 6a-c illustrieren, wie mittels einer erfindungsgemässen Vorrichtung die in den Figuren 3a-c dargestellten Probleme umgangen werden.

Figur 6a zeigt nebeneinander die von den beiden Kameras 3a, 3b der Vorrichtung aus Figur 5 gleichzeitig aufgenommenen Bilder 51, 52 des Gebäudes. Bei typischen Algorithmen zum Stereomatching, wie beispielsweise "Semi-Global Matching" ist als vorheriger Schritt nötig, dass die Bilder zueinander rektifiziert werden.

In Figur 6b hat eine entsprechende Rektifizierung der Bilder aus Figur 6a stattgefunden. In den rektifizierten Bildern 51', 52' ist eine epipolare Linie 70 dargestellt, die diese jeweils in einer Geraden schneidet. Nach der Rektifizierung sind die Epipolarlinien 70 in den rektifizierten Bildern 51', 52' horizontal, d. h. ein zu einem im ersten Bild 51' liegenden Bildpunkt (Pixel) korrespondierender Bildpunkt (Pixel) im zweiten Bild 52' liegt auf derselben Bildzeile. Ein zu einem im ersten Bild 51' gegebenen, auf der dargestellten Epipolarlinie 70 liegenden Punkt 71, korrespondierender Bildpunkt 72 im zweiten Bild 52' kann entsprechend ebenfalls nur auf der epipolaren Linie 70 liegen.

Zum Matchen der beiden Bilder 51, 52 muss der Algorithmus ein Merkmal im ersten rektifizierten Bild 51' also nur mit solchen Merkmalen des zweiten rektifizierten Bildes 52' vergleichen, die auf derselben Epipolarlinie 70 liegen. Hier ist im linken Bild 51' beispielhaft eine Ecke eines Fensterkreuzes als Merkmal 71 dargestellt. Durch die gleichförmige Bauweise wiederholen sich am Gebäude gleichartige Merkmale in horizontaler Richtung - beide Fenster sind gleich gross und gleich gestaltet und liegen zudem auf derselben Höhe.

Aufgrund der diagonalen Anordnung der Kameras verlaufen diese in der Natur horizontalen Linien in den rektifizierten Bildern diagonal. Dadurch liegen anders als in Figur 3b im rechten Bild 52' nicht mehrere ähnliche bzw. gleichartige Merkmale nebeneinander auf der Epipolarlinie 70, sondern nur das dem Merkmal 71 im ersten Bild 51 entsprechende Merkmal 72. Fehler bei der Zuordnung werden somit vermieden.

Figur 6c zeigt rektifizierte Bilder 51', 52', in welchen eine Entfernungsmessung der Strecke 75 zwischen zwei Punkten erfolgen soll. Im linken Bild 51' sind dies die Punkte 73 und 71, die jeweils auf einer horizontal verlaufenden Linie des Gebäudes liegen. Aufgrund der diagonalen Anordnung der Kameras verlaufen diese in der Natur horizontalen Linien in den rektifizierten Bildern diagonal. Daher sind die Punkte 72, 74 im rechten Bild 52' den Punkten 71, 73 im linken Bild 51' eindeutig zuordenbar, wodurch die Entfernung der Strecke 75 ebenfalls fehlerfrei ermittelbar ist.

Alternativ kann ein Matching natürlich auch ohne vorheriges Rektifizieren durchgeführt werden. Im Fall der herkömmlichen Vorrichtung aus Figur 1 kreuzt dann die (nominal) horizontale Epipolarlinie 70 mehrere identisch aussehende horizontal angeordnete Merkmale 72 und 72'. Mit der erfindungsgemässen Vorrichtung aus Figur 5 kreuzt die Epipolarlinie hingegen vorteilhaft nur Merkmal 72.

Alternativ können auch nur bestimmte interessante Punkte zueinander in Beziehung gesetzt werden, ohne dass das gesamte Bild verarbeitet werden muss. Beispielsweise kann nach einer Auswahl interessanter Punkte durch den Benutzer ein Template-Matching ausgeführt werden.

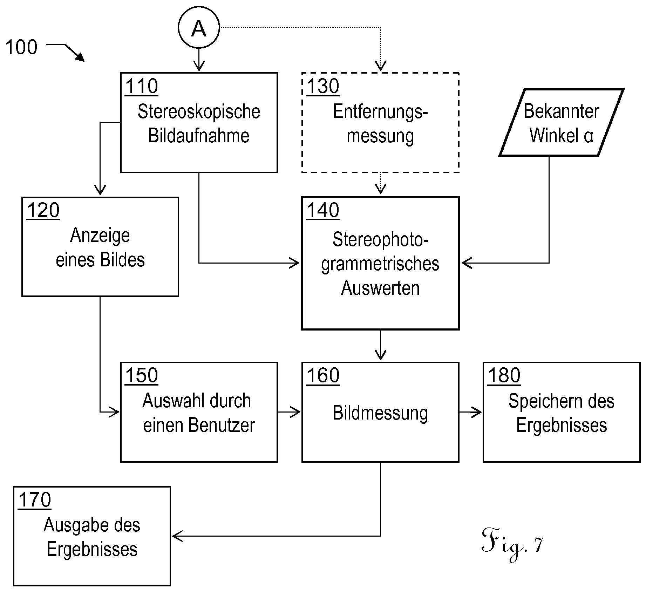

In Figur 7 wird eine beispielhafte Ausführungsform eines erfindungsgemässen Verfahrens 100 zum bildbasierten Vermessen eines entfernten Objekts mittels einer erfindungsgemässen handgehaltenen Vorrichtung illustriert.

Im Schritt 110 wird zunächst eine stereoskopische Aufnahme von Bildern des Objekts mittels der beiden Kameras ausgeführt. Optional kann gleichzeitig eine Entfernungsmessung 130 zum Objekt durchgeführt werden, um die Bilder genau skalieren zu können, und so einen genauen Massstab für Messungen im Bild zu haben.

Unter Verwendung der Kenntnis über den Winkel α (d. h. über die relative Ausrichtung der Stereobasis relativ zur Längsachse der Vorrichtung, siehe Figur 4b), und optional der Entfernungsmessung, findet in Schritt 140 eine stereophotogrammetrische Auswertung der stereoskopisch aufgenommenen Bilder statt.

Zugleich wird in Schritt 120 einem Benutzer auf der Anzeigeeinheit der Vorrichtung ein Bild des Objekts angezeigt, dies kann beispielsweise eines der Bilder der Kameras sein, oder bereits ein zusammengefügtes Bild. Der Benutzer wählt daraufhin in Schritt 150 anhand des Bildes bestimmte Strecken oder Flächen aus, deren Dimensionen vermessen werden sollen. Diese Dimensionen werden in Schritt 160 mittels Bildmessung in den stereophotogrammetrisch auswerteten Bildern bestimmt und zuletzt in Schritt 170 dem Benutzer auf der Anzeigeeinheit angezeigt und in Schritt 180 in einem Speicher der Vorrichtung gespeichert.

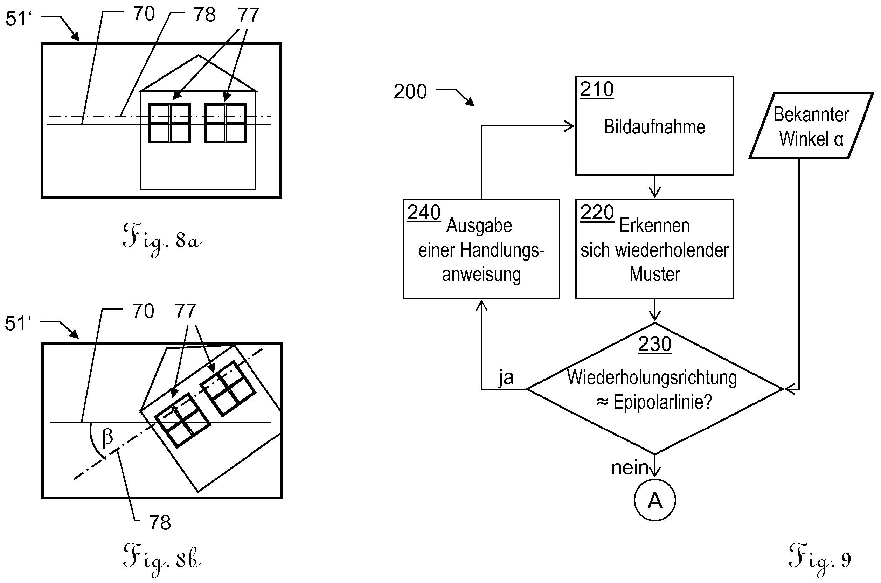

Die Auswerteeinheit der Vorrichtung ist dazu ausgestaltet, sich wiederholende Muster in den Bildern zu erkennen und daraus eine Wiederholungsrichtung sich wiederholender realer Merkmale abzuleiten. Dies wird in den Figuren 8a und 8b dargestellt.

Figur 8a zeigt beispielhaft ein rektifiziertes Bild 51' des Objekts wie von der Vorrichtung in Figur 1 aufgenommen. Der Algorithmus der Auswerteeinheit erkennt die Fenster des Gebäudes als sich wiederholende Merkmale 77 und leitet daraus eine Wiederholungsrichtung 78 dieser Merkmale ab.

Anschliessend wird festgestellt, dass die Wiederholungsrichtung 78 parallel zur Epipolarlinie 70 liegt, was wie in Figur 3b dargestellt, zu Fehlern beim Matching der Bilder führen kann. In diesem Fall leitet die Auswerteeinheit Massnahmen ein, diese Parallelität zu beenden. Unter anderem können diese Massnahmen einen Hinweis an den Benutzer beinhalten, eine neue Aufnahme zu machen, wobei die Vorrichtung anders gehalten wird, insbesondere gekippt zur letzten Aufnahme. Dieser Hinweis kann vorzugsweise auf der Anzeigeeinheit erfolgen, zusätzlich kann auch ein akustisches Signal oder eine Vibration ausgelöst werden.

Figur 8b zeigt beispielhaft ein rektifiziertes Bild 51' bei dem der Winkel β zwischen der Wiederholungsrichtung 78 der Merkmale 77 und der Epipolarlinie 70 gross genug ist. Dies kann insbesondere die Folge einer veränderten Haltung der Vorrichtung gegenüber derjenigen aus Figur 8a sein - oder die Folge einer Aufnahme mit der Vorrichtung aus Figur 5.

Die Auswerteeinheit ist dazu ausgestaltet, den Winkel β zwischen der Wiederholungsrichtung 78 und der Epipolarlinie 70 zu ermitteln, und die Massnahmen einzuleiten, wenn der Wert des Winkels β einen vordefinierten Schwellenwert unterschreitet.

Figur 9 illustriert weitere Schritte als einen Teil 200 des Verfahrens 100 aus Figur 7, die sich auf das in den Figuren 8a,b dargestellte Abgleichen von Epipolarlinie und Wiederholungsrichtung beziehen.

Insbesondere kann dieser Verfahrensteil 200 dem in Figur 7 dargestellten vorangestellt sein. Er beginnt in Schritt 210 mit einer Bildaufnahme durch eine oder beide Kameras der Vorrichtung, wobei mindestens ein Bild des zu vermessenden Objekts aufgenommen wird. In dem Bild werden sich wiederholende Objektmerkmale als sich wiederholende Muster erkannt (Schritt 220), und mit einer Epipolarlinie verglichen (Schritt 230) . Dazu kann der bekannte Winkel α der Stereobasis herangezogen werden. Sind sich Wiederholungsrichtung und Epipolarlinie zu ähnlich, liegt also ein Wert des Winkels β unter einem festgelegten Schwellenwert, wird eine Handlungsanweisung an den Benutzer ausgegeben, die Vorrichtung anders zu halten (Schritt 240). Ansonsten kann das in Figur 7 dargestellte Verfahren ausgeführt werden.

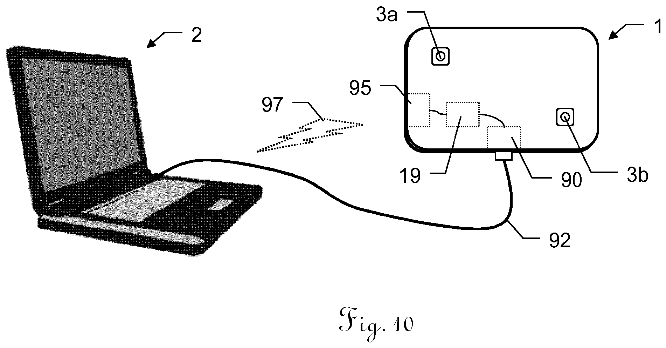

Figur 10 zeigt eine weitere beispielhafte Ausführungsform einer erfindungsgemässen handhaltbaren Stereophotogrammetrie-Vorrichtung 1. Diese weist mindestens eine Schnittstelle 90, 95 zur Verbindung mit einem externen elektronischen Gerät, beispielsweise einem Laptop-Computer 2, auf.

Beispielhaft dargestellt sind hier eine Stecker-Schnittstelle 90 zum Herstellen einer kabelgebundenen Verbindung 92 (z. B. mittels USB) und eine Funk-Schnittstelle 95 zum Herstellen einer kabellosen Verbindung 97 (z. B. mittels WLAN oder Bluetooth). Über die (kabelgebundene oder -lose) Verbindung 92, 97 werden Bilddaten der durch die Kameras 3a, 3b aufgenommenen Bilder an den Laptop 2 gesendet, wo sie stereophotogrammetrisch ausgewertet werden. Das System weist eine entsprechende Software auf, die auch Informationen über die Anordnung der beiden Kameras 3a, 3b bereitstellt, und dazu auf dem Laptop 2 installiert wird. Die Software ist vorzugsweise in einer Speichereinheit 19 der Vorrichtung 1 gespeichert und wird über die (kabelgebundene oder -lose) Verbindung 92, 97 an den Laptop 2 gesendet. Sie kann ebenso auf einem Datenträger oder in der Cloud bereitgestellt werden. Der Vorteil dieser Ausführungsform besteht darin, dass die handhaltbare Vorrichtung 1 keine eigene Auswerteeinheit aufzuweisen braucht; auch eine Anzeigeeinheit ist nicht nötig. Die Vorrichtung 1 kann dadurch kompakter und leichter ausfallen und mit geringerem technischen Aufwand hergestellt werden.

Die Stereophotogrammetrie-Vorrichtung 1 wird vom Benutzer zur Aufnahme von Bildern verwendet, deren Daten - entweder in Echtzeit oder im Anschluss an eine Aufnahmeserie - an den Laptop 2 übertragen werden. Die Software ist in der Speichereinheit 19 gespeichert und wird beispielsweise zusammen mit den Bilddaten an den Laptop 2 gesendet. Auf diesem können dann insbesondere die Schritte 140-170 des Verfahrens 100 aus Figur 7 ausführbar sein.

Es versteht sich, dass diese dargestellten Figuren nur mögliche Ausführungsbeispiele schematisch darstellen. Die verschiedenen Ansätze können ebenso miteinander wie mit Verfahren und Geräten des Stands der Technik kombiniert werden.

## Patentansprüche

1. Handhaltbare Vorrichtung (1) zum bildbasierten Vermessen eines entfernten Objekts (5), aufweisend
- ein Gehäuse (10) mit einer Vorderseite (11) und einer Rückseite (12);
- eine erste Kamera (3a) und eine zweite Kamera (3b), die mit einer Stereobasis (30) als einem festen Abstand zueinander auf der Rückseite (12) angeordnet sind, zur Aufnahme von Bildern (51, 52) des Objekts (5);
- eine Auswerteeinheit mit einem Algorithmus zum stereophotogrammetrischen Auswerten der Bilder (51, 52) der ersten Kamera (3a) und der zweiten Kamera (3b); und
- eine Anzeigeeinheit (20), die auf der Vorderseite (11) angeordnet ist, zur Anzeige von Bildern (50) des Objekts (5) und von Ergebnissen der stereophotogrammetrischen Auswertung,
wobei das Gehäuse (10) eine Längsachse (15) aufweist, und die Vorrichtung (1) zum handgehaltenen Gebrauch durch einen Benutzer derart ausgestaltet ist, dass die Vorrichtung (1) zur Aufnahme von Bildern (51, 52) des Objekts (5) so gehalten wird, dass die Längsachse (15) im wesentlichen horizontal ist,
**dadurch gekennzeichnet, dass**
die Stereobasis (30) relativ zur Längsachse (15) diagonal ausgerichtet ist, wobei die Auswerteeinheit dazu ausgestaltet ist,
- die relative Ausrichtung der Stereobasis (30) beim stereophotogrammetrischen Auswerten zu berücksichtigen,
- in mindestens einem der Bilder (51, 52) sich wiederholende Muster zu erkennen und daraus eine Wiederholungsrichtung (78) sich wiederholender Merkmale (77) des Objekts (5) abzuleiten, und
- einen Winkel β zwischen der Wiederholungsrichtung (78) und einer Epipolarlinie (70) zu ermitteln.

2. Vorrichtung (1) nach Anspruch 1,
**gekennzeichnet durch**
einen elektronischen Distanzmesser (4), insbesondere ausgebildet als ein Laserentfernungsmesser, der auf der Rückseite (12) angeordnet ist, zum Messen einer Entfernung zu dem entfernten Objekt (5), wobei die Auswerteeinheit dazu ausgestaltet ist, die gemessene Entfernung beim stereophotogrammetrischen Auswerten zu berücksichtigen.

3. Vorrichtung (1) nach Anspruch 1 oder Anspruch 2,
**dadurch gekennzeichnet, dass**
die Stereobasis (30) relativ zur Längsachse (15) in einem Winkel (α) von mindestens 20° angeordnet ist, insbesondere in einem Winkel zwischen 30° und 60°.

4. Vorrichtung (1) nach einem der vorangehenden Ansprüche,
**dadurch gekennzeichnet, dass**
die Kameras (3a, 3b) derart angeordnet sind, dass die Stereobasis (30) mindestens 75% einer maximalen Ausdehnung der Rückseite (12) umfasst, insbesondere mindestens 90%.

5. Vorrichtung (1) nach einem der vorangehenden Ansprüche,
**gekennzeichnet durch**
Eingabemittel, die auf der Vorderseite (11) angeordnet sind, zur Eingabe von Daten und/oder Befehlen durch einen Benutzer, insbesondere wobei die Eingabemittel als Tasten (21) ausgestaltet sind, oder wobei die Anzeigeeinheit (20) und die Eingabemittel als ein Touchscreen ausgebildet sind.

6. Vorrichtung (1) nach Anspruch 5,
**dadurch gekennzeichnet, dass**
die Eingabemittel dazu ausgestaltet sind, ein Markieren oder Auswählen von Bildpunkten (56, 57) in dem Bild (50) des Objekts (5) durch einen Benutzer zu ermöglichen, wobei die Bildpunkte (56, 57) Zielpunkten (66, 67) des Objekts (5) entsprechen, und die Auswerteeinheit dazu ausgestaltet ist, eine Distanz (68) zwischen den den ausgewählten Bildpunkten (56, 57) entsprechenden Zielpunkten (66, 67) zu ermitteln und auf der Anzeigeeinheit (20) anzuzeigen.

7. Vorrichtung (1) nach einem der vorangehenden Ansprüche,
**gekennzeichnet durch**
eine nach einem Auslösen durch einen Benutzer automatisch ablaufende Aufnahmefunktionalität, im Rahmen welcher
- im zeitlichen Zusammenhang, insbesondere gleichzeitig, die erste Kamera (3a) ein erstes Bild (51) und die zweite Kamera (3b) ein zweites Bild (52) des Objekts (5) aufnehmen,
- der Algorithmus der Auswerteeinheit das erste Bild (51) und das zweite Bild (52) mittels Merkmalserkennung und anhand der Kenntnis über die Stereobasis (30) zueinander in Beziehung setzen, und
- ein Bild (50) des Objekts (5) auf der
Anzeigeeinheit (20) angezeigt wird,
insbesondere wobei das Zueinander-in-Beziehung-Setzen des ersten Bildes (51) und des zweiten Bildes (52) aufweist:
- ein Rektifizieren der Bilder (51, 52), und
- ein Stereomatching der rektifizierten Bilder (51', 52'), insbesondere mittels des Semi-Global-Matching-Verfahrens.

8. Vorrichtung (1) nach Anspruch 1,
**dadurch gekennzeichnet, dass**
die Auswerteeinheit dazu ausgestaltet ist,
- in mindestens einem der Bilder (51, 52) sich wiederholende Muster zu erkennen und daraus eine Wiederholungsrichtung (78) sich wiederholender Merkmale (77) des Objekts (5) abzuleiten, und
- einen Winkel β zwischen der Wiederholungsrichtung (78) und einer Epipolarlinie (70) zu ermitteln,
wobei die Auswerteeinheit dazu ausgestaltet ist, Massnahmen einzuleiten, wenn der Wert des Winkels β einen vordefinierten Schwellenwert unterschreitet, wobei die Massnahmen dazu geeignet sind, zu einer weiteren Aufnahme von Bildern (51, 52) des Objekts (5) zu führen, bei denen der vordefinierte Schwellenwert erreicht oder überschritten wird.

9. Vorrichtung (1) nach Anspruch 8,
**dadurch gekennzeichnet, dass**
die Massnahmen eine Handlungsanweisung für einen Benutzer umfassen, die Vorrichtung (1) für die weitere Aufnahme im Vergleich zu einer vorherigen Aufnahme schräg zu halten, insbesondere wobei die Handlungsanweisung auf der Anzeigeeinheit (20) angezeigt wird.

10. Verfahren (100) zum bildbasierten Vermessen eines entfernten Objekts (5) mittels einer handgehaltenen Vorrichtung (1) nach einem der vorangehenden Ansprüche, aufweisend
- eine stereoskopische Aufnahme (110) von Bildern (51, 52) durch eine erste Kamera (3a) und eine zweite Kamera (3b), und
- einem stereophotogrammetrischen Auswerten (140) der Bilder (51, 52) der ersten Kamera (3a) und der zweiten Kamera (3b),
wobei die Vorrichtung (1) eine Längsachse (15) aufweist und während der Aufnahme (110) durch einen Benutzer derart gehalten wird, dass die Längsachse (15) im wesentlichen horizontal ist,
**dadurch gekennzeichnet, dass**
- das Auswerten (140) der Bilder (51, 52) unter Berücksichtigung eines bekannten Winkels α erfolgt, wobei die erste Kamera (3a) und die zweite Kamera (3b) mit einer Stereobasis (30) als einem festen Abstand zueinander auf der Vorrichtung (1) derart angeordnet sind, dass die Stereobasis (30) mit dem Winkel α relativ zu der Längsachse (15) der Vorrichtung (1) diagonal ausgerichtet ist,
- in mindestens einem der Bilder (51, 52) sich wiederholende Muster erkannt werden und daraus eine Wiederholungsrichtung (78) sich wiederholender Merkmale (77) des Objekts (5) abgeleitet wird, und
- einen Winkel β zwischen der Wiederholungsrichtung (78) und einer Epipolarlinie (70) ermittelt wird.

11. Verfahren (100) nach Anspruch 10,
**gekennzeichnet durch**
- eine Anzeige (120) eines Bildes (50) auf einer Anzeigeeinheit (20) der Vorrichtung (1), basierend auf mindestens einem der Bilder (51, 52) der ersten Kamera (3a) und der zweiten Kamera (3b),
- einer Auswahl (150) zu vermessender Dimensionen durch einen Benutzer,
- einer der Auswahl (150) entsprechenden Vermessung (160) basierend auf den stereophotogrammetrisch ausgewerteten Bildern (51, 52), und
- einer Ausgabe (170) des Ergebnisses auf einer Anzeigeeinheit (20) und/oder einem Speichern (180) des Ergebnisses in einem Datenspeicher der Vorrichtung (1).

12. Computerprogrammprodukt mit Programmcode, der auf einem maschinenlesbaren Träger gespeichert ist, zur Ausführung eines Verfahrens (100) nach dem Anspruch 10 und insbesondere nach dem Anspruch 11 zum bildbasierten Vermessen eines entfernten Objekts (5) mittels einer handgehaltenen Vorrichtung (1),wobei das Programm in der Auswerteeinheit der Vorrichtung (1) nach einem der Ansprüche 1 bis 9 ausgeführt wird und mindestens die folgenden Schritte aufweist:
- eine stereoskopische Aufnahme (110) von Bildern (51, 52) durch die erste Kamera (3a) und die zweite Kamera (3b), und
- ein stereophotogrammetrisches Auswerten (140) der Bilder (51, 52) der ersten Kamera (3a) und der zweiten Kamera (3b), wobei das Auswerten (140) unter Berücksichtigung des bekannten Winkels α erfolgt,
- ein Erkennen von sich wiederholenden Mustern in mindestens einem der Bilder (51,52) und daraus eine Wiederholungsrichtung (78) sich wiederholender Merkmale (77) des Objekts (5) abzuleiten, und
- ein Ermitteln eines Winkel β zwischen der Wiederholungsrichtung (78) und einer Epipolarlinie (70).

13. System zum bildbasierten Vermessen eines entfernten Objekts (5), aufweisend eine handhaltbare Vorrichtung (1) und ein Computerprogrammprodukt, wobei die handhaltbare Vorrichtung (1) aufweist:
- ein Gehäuse (10) mit einer Vorderseite (11) und einer Rückseite (12);
- eine erste Kamera (3a) und eine zweite Kamera (3b), die mit einer Stereobasis (30) als einem festen Abstand zueinander auf der Rückseite (12) angeordnet sind, zur Aufnahme von Bildern (51, 52) des Objekts (5); und
- eine Datenschnittstelle (90, 95) zum Übermitteln digitaler Bilddaten aufgenommener Bilder (51, 52) an ein externes elektronisches Gerät (2),
wobei das Gehäuse (10) eine Längsachse (15) aufweist, und die Vorrichtung (1) zum handgehaltenen Gebrauch durch einen Benutzer derart ausgestaltet ist, dass die Vorrichtung (1) zur Aufnahme von Bildern (51, 52) des Objekts (5) so gehalten wird, dass die Längsachse (15) im wesentlichen horizontal ist, und wobei das Computerprogrammprodukt Programmcode aufweist, der auf einem maschinenlesbaren Träger gespeichert ist, mit einem Algorithmus zum stereophotogrammetrischen Auswerten der Bilder (51, 52) der ersten Kamera (3a) und der zweiten Kamera (3b),
**dadurch gekennzeichnet, dass**
die Stereobasis (30) relativ zur Längsachse (15) diagonal ausgerichtet ist, wobei der Programmcode
- eine Information über die relative Ausrichtung der Stereobasis (30) enthält,
- in dem externen elektronischen Gerät (2) ausführbar ist,
und dazu ausgestaltet ist,
- die relative Ausrichtung der Stereobasis (30) beim stereophotogrammetrischen Auswerten zu berücksichtigen,
- in mindestens einem der Bilder (51, 52) sich wiederholende Muster zu erkennen und daraus eine Wiederholungsrichtung (78) sich wiederholender Merkmale (77) des Objekts (5) abzuleiten, und
- einen Winkel β zwischen der Wiederholungsrichtung (78) und einer Epipolarlinie (70) zu ermitteln.

14. System nach Anspruch 13,
**dadurch gekennzeichnet, dass**
die handhaltbare Vorrichtung (1)
- den maschinenlesbaren Träger aufweist, insbesondere wobei der maschinenlesbare Träger ein fest verbauter Datenspeicher (19) ist, und
- dazu ausgestaltet ist, den Programmcode über die Datenschnittstelle (90, 95) an das externe elektronische Gerät (2) zu übermitteln.

## Claims

1. Handheld device (1) for the image-based measurement of a remote object (5), comprising
- a housing (10) having a front side (11) and a rear side (12);
- a first camera (3a) and a second camera (3b), which are arranged having a stereo base (30) as a fixed spacing in relation to one another on the rear side (12), for recording images (51, 52) of the object (5);
- an analysis unit having an algorithm for the stereophotogrammetric analysis of the images (51, 52) of the first camera (3a) and the second camera (3b); and
- a display unit (20), which is arranged on the front side (11), for displaying images (50) of the object (5) and results of the stereophotogrammetric analysis;
wherein the housing (10) has a longitudinal axis (15) and the device (1) is designed for handheld use by a user in such a way that the device (1) is held to record images (51, 52) of the object (5) in such a way that the longitudinal axis (15) is substantially horizontal,
**characterized in that,**
the stereo base (30) is aligned diagonally in relation to the longitudinal axis (15), wherein the analysis unit is designed for the purpose of
- taking into consideration the relative alignment of the stereo base (30) during the stereophotogrammetric analysis,
- recognizing repeating patterns in at least one of the images (51, 52) and deriving a repetition direction (78) of repeating features (77) of the object (5) therefrom, and
- ascertaining an angle β between the repetition direction (78) and an epipolar line (70).

2. Device (1) according to Claim 1,
**characterized by** an electronic distance meter (4), designed in particular as a laser distance meter, which is arranged on the rear side (12), for measuring a distance to the remote object (5), wherein the analysis unit is designed for the purpose of taking into consideration the measured distance during the stereophotogrammetric analysis.

3. Device (1) according to Claim 1 or Claim 2,
**characterized in that** the stereo base (30) is arranged at an angle (α) of at least 20°, in particular at an angle between 30° and 60°, in relation to the longitudinal axis (15).

4. Device (1) according to any one of the preceding claims,
**characterized in that** the cameras (3a, 3b) are arranged such that the stereo base (30) comprises at least 75% of a maximum extension of the rear side (12), in particular at least 90%.

5. Device (1) according to any one of the preceding claims,
**characterized by** input means, which are arranged on the front side (11), for the input of data and/or commands by a user, in particular wherein the input means are embodied as buttons (21), or wherein the display unit (20) and the input means are designed as a touchscreen.

6. Device (1) according to Claim 5,
**characterized in that** the input means are designed for the purpose of enabling marking or selection of pixels (56, 57) in the image (50) of the object (5) by a user, wherein the pixels (56, 57) correspond to target points (66, 67) of the object (5), and the analysis unit is designed for the purpose of ascertaining a distance (68) between the target points (66, 67) corresponding to the selected pixels (56, 57) and displaying it on the display unit (20).

7. Device (1) according to any one of the preceding claims,
**characterized by** a recording functionality running automatically after triggering by a user, in the scope of which
- in chronological correlation, in particular simultaneously, the first camera (3a) records a first image (51) and the second camera (3b) records a second image (52) of the object (5),
- the algorithm of the analysis unit relates the first image (51) and the second image (52) to one another by means of feature recognition and on the basis of the knowledge about the stereo base (30), and
- an image (50) of the object (5) is displayed on the display unit (20),
in particular wherein the relating of the first image (51) and the second image (52) to one another comprises:
- a rectification of the images (51, 52), and
- a stereo matching of the rectified images (51', 52'), in particular by means of the semi-global matching method.

8. Device (1) according to claim 1,
**characterized in that** the analysis unit is designed for the purpose
- of recognizing repeating patterns in at least one of the images (51, 52) and deriving a repetition direction (78) of repeating features (77) of the object (5) therefrom, and
- of ascertaining an angle β between the repetition direction (78) and an epipolar line (70),
wherein the analysis unit is designed for the purpose of initiating measures if the value of the angle β falls below a predefined threshold value, wherein the measures are capable of resulting in a further recording of images (51, 52) of the object (5), in which the predefined threshold value is reached or exceeded.

9. Device (1) according to claim 8,
**characterized in that** the measures comprise a handling instruction for a user to hold the device (1) diagonally for the further recording in comparison to a prior recording, in particular wherein the handling instruction is displayed on the display unit (20).

10. Method (100) for the image-based measurement of a remote object (5) by means of a handheld device (1) according to any one of the preceding claims, comprising
- a stereoscopic recording (110) of images (51, 52) by a first camera (3a) and a second camera (3b), and
- a stereophotogrammetric analysis (140) of the images (51, 52) of the first camera (3a) and the second camera (3b),
wherein the device (1) has a longitudinal axis (15) and is held by a user during recording in such a way that the longitudinal axis (15) is substantially horizontal,
**characterized in that**
- the analysis (140) of the images (51, 52) is performed in consideration of a known angle α, wherein the first camera (3a) and the second camera (3b) are arranged having a stereo base (30) as a fixed spacing in relation to one another on the device (1) such that the stereo base (30) is diagonally oriented at the angle α in relation to a longitudinal axis (15) of the device (1),
- in at least one of the images (51, 52) repeating patterns are recognized and a repetition direction (78) of repeating features (77) of the object (5) is derived therefrom, and
- an angle β between the repetition direction (78) and an epipolar line (70) is ascertained.

11. Method (100) according to Claim 10,
**characterized by**
- a display (120) of an image (50) on a display unit (20) of the device (1), based on at least one of the images (51, 52) of the first camera (3a) and the second camera (3b),
- a selection (150), by a user, of dimensions to be measured,
- a measurement (160) corresponding to the selection (150) based on the stereophotogrammetrically analyzed images (51, 52), and
- an output (170) of the result on a display unit (20) and/or a storage (180) of the result in a data storage unit of the device (1).

12. Computer program product having program code which is stored on a machine-readable carrier for executing a method (100) according to Claim 10 and in particular according to Claim 11, for the image-based measurement of a remote object (5) by means of a handheld device (1), wherein the program is executed in the analysis unit of the device (1) according to any one of Claims 1 to 9 and at least comprises the following steps:
- a stereoscopic recording (110) of images (51, 52) by the first camera (3a) and the second camera (3b), and
- a stereophotogrammetric analysis (140) of the images (51, 52) of the first camera (3a) and the second camera (3b), wherein the analysis (140) is performed in consideration of a known angle α,
- a recognition of repeating patterns in at least one of the images (51, 52) and deriving a repetition direction (78) of repeating features (77) of the object (5) therefrom, wherein
- an ascertainment of an angle β between the repetition direction (78) and an epipolar line (70).

13. System for the image-based measurement of a remote object (5), comprising a handheld device (1) and a computer program product, wherein the handheld device (1) comprises:
- a housing (10) having a front side (11) and a rear side (12);
- a first camera (3a) and a second camera (3b), which are arranged having a stereo base (30) as a fixed spacing in relation to one another on the rear side (12), for recording images (51, 52) of the object (5); and
- a data interface (90, 95) for transmitting digital image data of recorded images (51, 52) to an external electronic device (2),
wherein the housing (10) has a longitudinal axis (15) and the device (1) is designed for handheld use by a user in such a way that the device (1) is held to record images (51, 52) of the object (5) in such a way that the longitudinal axis (15) is substantially horizontal, and wherein the computer program product comprises program code which is stored on a machine-readable carrier having an algorithm for the stereophotogrammetric analysis of the images (51, 52) of the first camera (3a) and the second camera (3b),
**characterized in that**
the stereo base (30) is aligned diagonally in relation to the longitudinal axis (15), wherein the program code
- contains an item of information about the relative alignment of the stereo base (30),
- is executable in the external electronic device (2), and
is designed for the purpose of
- taking into consideration the relative alignment of the stereo base (30) during the stereophotogrammetric analysis,
- recognizing repeating patterns in at least one of the images (51, 52) and deriving a repetition direction (78) of repeating features (77) of the object (5) therefrom, and
- ascertaining an angle β between the repetition direction (78) and an epipolar line (70).

14. System according to Claim 13,
**characterized in that** the handheld device (1)
- comprises the machine-readable carrier, in particular wherein the machine-readable carrier is a permanently installed data storage unit (19), and
- is designed for the purpose of transmitting the program code via the data interface (90, 95) to the external electronic device (2).

## Revendications

1. Dispositif (1) pouvant être porté à la main et destiné à mesurer par prise d'image un objet (5) distant, présentant:
- un boîtier (10) doté d'une face avant (11) et d'une face arrière (12) ;
- une première caméra (3a) et une deuxième caméra (3b) disposées sur ladite face arrière (12) à une distance mutuelle fixe grâce à une base stéréo (30) et destinées à prendre des images (51, 52) dudit objet (5) ;
- une unité d'évaluation dotée d'un algorithme pour l'évaluation stéréophotogrammétrique desdites images (51, 52) de la première caméra (3a) et de la deuxième caméra (3b) ; et
- une unité d'affichage (20) disposée sur ladite face avant (11) et destinée à afficher des images (50) dudit objet (5) et des résultats de l'évaluation stéréophotogrammétrique,
ledit boîtier (10) présentant un axe longitudinal (15) et ledit dispositif (1) étant, pour l'utilisation par un utilisateur qui le porte à la main, conçu pour être tenu, en vue de la prise d'images (51, 52) de l'objet (5), de telle manière que son axe longitudinal (15) est essentiellement horizontal,
**caractérisé en ce que**
ladite base stéréo (30) est orientée en diagonale par rapport audit axe longitudinal (15), ladite unité d'évaluation étant conçue pour :
- tenir compte de l'orientation relative de ladite base stéréo (30) lors de l'évaluation stéréophotogrammétrique,
- reconnaître des motifs récurrents dans au moins une desdites images (51, 52) et en déduire une direction de récurrence (78) de caractéristiques récurrentes (77) dudit objet (5), et
- déterminer un angle β entre ladite direction de récurrence (78) et une droite épipolaire (70).

2. Dispositif (1) selon la revendication 1,
**caractérisé par**
un télémètre électronique (4), notamment conçu sous la forme d'un distance-mètre laser disposé sur la face arrière (12), pour mesurer la distance par rapport à l'objet (5) distant, l'unité d'évaluation étant conçue pour tenir compte de la distance mesurée lors de l'évaluation stéréophotogrammétrique.

3. Dispositif (1) selon la revendication 1 ou 2,
**caractérisé en ce que**
la base stéréo (30) est disposée selon un angle (α) d'au moins 20° avec l'axe longitudinal, notamment selon un angle entre 30° et 60°.

4. Dispositif (1) selon l'une des revendications précédentes,
**caractérisé en ce que**
les caméras (3a, 3b) sont disposées de manière que la base stéréo (30) couvre au moins 75 % de l'étendue maximale de la face arrière (12), notamment au moins 90 %.

5. Dispositif (1) selon l'une des revendications précédentes,
**caractérisé par**
des moyens de saisie disposés sur la face avant (11) et servant à la saisie de données et/ou de commandes par un utilisateur, lesdits moyens de saisie étant notamment sous la forme de touches (21) ou l'unité d'affichage (20) et les moyens de saisie étant sous la forme d'un écran tactile.

6. Dispositif (1) selon la revendication 5,
**caractérisé en ce que**
les moyens de saisie sont conçus pour permettre à un utilisateur de marquer ou de choisir des points d'image (56, 57) dans l'image (50) de l'objet (5), lesdits points d'image (56, 57) correspondant à des points cibles (66, 67) de l'objet (5), et l'unité d'évaluation est conçue pour déterminer une distance (68) entre les points cibles (66, 67) correspondant aux points d'image (56, 57) choisis et pour l'afficher sur l'unité d'affichage (20).

7. Dispositif (1) selon l'une des revendications précédentes,
**caractérisé par**
une fonctionnalité de prise d'images automatiquement exécutée après déclenchement par un utilisateur, dans le cadre de laquelle :
- d'une manière coordonnée dans le temps, notamment de manière simultanée, la première caméra (3a) prend une première image (51) et la deuxième caméra (3b) prend une deuxième image (52) de l'objet (5),
- l'algorithme de l'unité d'évaluation met en relation la première image (51) et la deuxième image (52) par reconnaissance de caractéristiques et grâce à sa connaissance de la base stéréo (30), et
- une image (50) de l'objet (5) est affichée sur l'unité d'affichage (20),
la mise en relation de la première image (51) et de la deuxième image (52) comprenant notamment :
- une rectification des images (51, 52), et
- une mise en correspondance stéréo des images rectifiées (51', 52'), notamment au moyen de la méthode de correspondance semi-globale.

8. Dispositif (1) selon la revendication 1,
**caractérisé en ce que**
l'unité d'évaluation est conçue pour :
- reconnaître des motifs récurrents dans au moins une desdites images (51, 52) et en déduire une direction de récurrence (78) de caractéristiques récurrentes (77) dudit objet (5), et
- déterminer un angle β entre ladite direction de récurrence (78) et une droite épipolaire (70),
l'unité d'évaluation étant conçue pour engager des actions lorsque la valeur dudit angle β est inférieure à un seuil prédéfini, lesdites actions étant appropriées pour conduire à une nouvelle prise d'images (51, 52) de l'objet (5) pour lesquelles le seuil prédéfini est atteint ou dépassé.

9. Dispositif (1) selon la revendication 8,
**caractérisé en ce que**
les actions comprennent une instruction de manipulation destinée à un utilisateur de tenir ledit dispositif (1) incliné pour la nouvelle prise d'images, par rapport à une prise d'images antérieure, ladite instruction de manipulation étant notamment affichée sur l'unité d'affichage (20).

10. Procédé (100) de mesure par prise d'images d'un objet (5) distant au moyen d'un dispositif (1) porté à la main selon l'une des revendications précédentes, ledit procédé comprenant les étapes suivantes :
- prise (110) stéréoscopique d'images (51, 52) par une première caméra (3a) et une deuxième caméra (3b), et
- évaluation (140) stéréophotogrammétrique desdites images (51, 52) de la première caméra (3a) et de la deuxième caméra (3b),
ledit dispositif (1) présentant un axe longitudinal (15) et étant tenu par un utilisateur, pendant la prise (110) d'images, de telle manière que son axe longitudinal (15) est essentiellement horizontal,
**caractérisé en ce que**
- l'évaluation (140) des images (51, 52) est effectuée en tenant compte d'un angle α connu, la première caméra (3a) et la deuxième caméra (3b) étant disposées sur ledit dispositif (1) à une distance mutuelle fixe grâce à une base stéréo (30) de manière que ladite base stéréo (30) est orientée en diagonale selon ledit angle α par rapport audit axe longitudinal (15) dudit dispositif (1),
- des motifs récurrents sont reconnus dans au moins une desdites images (51, 52) et il en est déduit une direction de récurrence (78) de caractéristiques récurrentes (77) dudit objet (5), et
- il est déterminé un angle β entre ladite direction de récurrence (78) et une droite épipolaire (70).

11. Procédé (100) selon la revendication 10,
**caractérisé par**
- l'affichage (120) d'une image (50) sur une unité d'affichage (20) du dispositif (1), à partir d'au moins une des images (51, 52) de la première caméra (3a) et de la deuxième caméra (3b),
- le choix (150), par un utilisateur, de dimensions à mesurer,
- une mesure (160) correspondant audit choix (150) et tenant compte des images (51, 52) évaluées par stéréophotogrammétrie, et
- une production (170) du résultat sur une unité d'affichage (20) et/ou un enregistrement (180) dudit résultat dans une mémoire de données du dispositif (1).

12. Produit-programme d'ordinateur comportant un code de programme qui est enregistré sur un support lisible par une machine et qui est destiné à l'exécution d'un procédé (100) selon la revendication 10 et notamment selon la revendication 11 pour mesurer par prise d'images un objet (5) distant au moyen d'un dispositif (1) porté à la main, le programme étant exécuté dans l'unité d'évaluation dudit dispositif (1) selon l'une des revendications 1 à 9 et comprenant au moins les étapes suivantes :
- prise (110) stéréoscopique d'images (51, 52) par la première caméra (3a) et la deuxième caméra (3b), et
- évaluation (140) stéréophotogrammétrique desdites images (51, 52) de la première caméra (3a) et de la deuxième caméra (3b), ladite évaluation (140) étant effectuée en tenant compte de l'angle α connu,
- reconnaissance de motifs récurrents dans au moins une desdites images (51, 52) et déduction d'une direction de récurrence (78) de caractéristiques récurrentes (77) dudit objet (5), et
- détermination d'un angle β entre ladite direction de récurrence (78) et une droite épipolaire (70).

13. Système de mesure par prise d'images d'un objet (5) distant, présentant un dispositif (1) pouvant être porté à la main et un produit-programme d'ordinateur, dans lequel ledit dispositif (1) pouvant être porté à la main présente :
- un boîtier (10) doté d'une face avant (11) et d'une face arrière (12) ;
- une première caméra (3a) et une deuxième caméra (3b) disposées sur ladite face arrière (12) à une distance mutuelle fixe grâce à une base stéréo (30) et destinées à prendre des images (51, 52) dudit objet (5) ; et
- une interface de données (90, 95) destinée à transmettre des données numériques des images (51, 52) prises à un appareil électronique externe (2),
ledit boîtier (10) présentant un axe longitudinal (15) et ledit dispositif (1) étant, pour l'utilisation par un utilisateur qui le porte à la main, conçu pour être tenu, en vue de la prise d'images (51, 52) de l'objet (5), de telle manière que son axe longitudinal (15) est essentiellement horizontal, et ledit produit-programme d'ordinateur comportant un code de programme enregistré sur un support lisible par une machine, et doté d'un algorithme d'évaluation stéréophotogrammétrique des images (51, 52) de la première caméra (3a) et de la deuxième caméra (3b),
**caractérisé en ce que**
la base stéréo (30) est orientée en diagonale par rapport audit axe longitudinal (15), ledit code de programme
- comportant une information sur l'orientation relative de la base stéréo (30),
- pouvant être exécuté par l'appareil électronique externe (2),
et étant conçu pour
- tenir compte de l'orientation relative de ladite base stéréo (30) lors de l'évaluation stéréophotogrammétrique,
- reconnaître des motifs récurrents dans au moins une desdites images (51, 52) et en déduire une direction de récurrence (78) de caractéristiques récurrentes (77) dudit objet (5), et
- déterminer un angle β entre ladite direction de récurrence (78) et une droite épipolaire (70).

14. Système selon la revendication 13,
**caractérisé en ce que**
le dispositif (1) pouvant être porté à la main :
- comporte le support lisible par une machine, ledit support lisible par une machine étant notamment une mémoire de données (19) intégrée de manière permanente, et
- est conçu pour transmettre le code de programme à l'appareil électronique externe (2) par l'interface de données (90, 95).
